# EUROPEAN PATENT SPECIFICATION

(11) **EP 1 042 825 B1**
(45) Date of publication and mention of the grant of the patent: **19.03.2003**
(21) Application number: 98965339.9
(22) Date of filing: 22.12.1998
(51) Int. Cl.: H01M 2/10

(54) **A PORTABLE ELECTRONIC APPARATUS, WITH BATTERY SUPPLIED COMPONENTS**
TRAGBARE ELEKTRONISCHE VORRICHTUNG MIT BATTERIEGESPEISTEN KOMPONENTEN
APPAREIL ELECTRONIQUE PORTATIF DOTE DE COMPOSANTS ALIMENTES PAR BATTERIES

(30) Priority: 23.12.1997 SE 9704855
(43) Date of publication of application: 11.10.2000
(73) Proprietor: TELEFONAKTIEBOLAGET LM ERICSSON, 126 25 Stockholm (SE)
(72) Inventor: WOLF, Mats, Erik, 247 35 S Sandby (SE)
(74) Representative: Petri, Stellan
(86) International application number: SE9802415
(87) International publication number: WO99033124

(56) References cited:
- US-A- 5 124 508
- US-A- 5 485 073
- US-A- 5 658 685

## Description

### Field of the Invention

The present invention relates to portable electronic apparatuses and particularly to electronic apparatuses comprising a plurality of battery supplied components, wherein at least two components require different amounts supply voltages or currents.

### Description of the Prior Art

Battery supplied electronic equipment utilizes, for example, rechargeable batteries in a single power source, a battery pack powering the different components of the equipment. Conventionally, the battery pack is replaceable, since the cells in general have shorter lifetime than the equipment itself. The battery pack concept suffers from some obvious disadvantages, for example that the battery is a separate component and can not easily be integrated with the equipment in any efficient way. Further, a single battery supply of a device with several different power consuming functions and components having different electric requirements, in terms of voltage and current, requires transformations, with necessity resulting in power losses, and additional contact resistance is introduced between the battery pack and the present device.

Rechargeable batteries used for electronic equipment consist of an electrochemically reactive couple separated by an ion transport medium or electrolyte. Such batteries utilize a liquid electrolyte, requiring a can for its storage. Further, the can is used for maintaining an intimate contact between the different layers in the cell (anode/separator/cathode).

However, the availability of solids capable of being fabricated into electronically insulting elements with fairly low overall ionic resistance has stimulated the development of solid electrolyte batteries. Several of these types of batteries are commercially available and are important power sources at normal temperatures in, for example, volatile computer memories and other low power applications requiring long shelf and service life. New battery developments include cells with solid state, gel or hybrid polymer electrolytes. There are no free liquid electrolytes in such cells. Further, the internal structure of such cells is maintained by the polymer. Thus, there is no need for a can for the cell construction.

The cells are typically based on lithium (Li) or Li-ion technology. Lithium as an anode material has several advantages. It has a high specific capacity on both the weight and the volume basis. Further, it is strongly electro-positive, leading to high voltage when coupled with typical cathode materials. Suitable lithium ion conductors are available for use as solid electrolytes.

Additional advantages of polymer electrolyte cells over liquid electrolyte cells with fluid electrode components, are their low rates of self-discharge, the ability to operate over a wide range of environmental conditions, and high energy densities. Further these constructions are flexible in design, fabricated as thin cells and generally preferred from a performance perspective.

US-A-5 124 508 discloses an invention using sheet battery material as a circuit board substrate to eliminate the weight and bulk of batteries as separate circuit components and also to eliminate the weight and bulk of fiberglass substrate or flex substrate as printed circuit materials. It is an object of the invention to consolidate electronic circuitry by mounting the circuitry on the neutral insulating covering of sheet battery material on one or both sides of a battery unit.

Printed circuit and surface mounting techniques and evaporate circuit techniques are used on both fibre board and flex circuit films. Further, it is an object of the invention to allow ease of assembly and in field replacement of the battery unit for circuit structure independent of the battery unit.

According to an invention disclosed by WO92/19090 it is proposed to provide a circuit board with an electrical power supply comprising a cell formed integrally in the circuit board. By forming the cell integrally in the circuit board it is possible to eliminate the requirement for a separate casing, since in a fact the circuit board performs that function. Similarly as for US-A-5 124 508 this invention is designed for use with circuit boards.

### Summary of the Invention

The present invention provides portable electronic apparatuses, comprising a plurality of battery supplied components, wherein solid-state, gel or hybrid polymer electrolyte batteries are utilised to make the most effective use of the cell energy and most efficient use of the space in the particular apparatus.

This is accomplished by using several individual batteries, each battery being adapted for the power supply of a particular device, located in a cavity and integrated with the respective device.

A particular object of the invention is to supply various components of, for example, a portable computer using one battery for each component, such as a display, a PCB, a harddisk, a CD-ROM drive etc.

Still another object of the invention is to provide for power supply for different components of, for example, a mobile telephone. Such components are a logic part, a radio part, and a display.

Thus, the present invention discloses an arrangement for portable electronic apparatuses provided with thin film battery cells, wherein the use of this new technology benefits from making the electronic equipment both energy effective and more space efficient.

### Brief Description of the Drawings

In order to explain the invention in more detail and the advantages and features of the invention a preferred embodiment will be described in detail below, reference being made to the accompanying drawings, in which
FIG 1 is a front view of a portable computer provided with batteries according to the invention;
FIG 2 is a side view of the computer in FIG 1;
FIG 3 is a mobile telephone apparatus provided with batteries according to the invention; and
FIG 4 is a side view of the mobile telephone apparatus in FIG 3.

### Detailed Description of the Invention

The present invention discloses an arrangement for portable electronic apparatuses comprising a plurality of battery supplied components, wherein several components require different supply voltages or currents.

In order to feed the different parts of an electronic device, solid-state, gel or hybrid polymer electrolyte batteries are integrated in the device and different batteries are adapted to achieve the required capacity, such as voltage, for the supply of a particular function or component of the device. The said batteries are integrated in the device and have a shape suitable to fit into cavities and to engage with surfaces within the device.

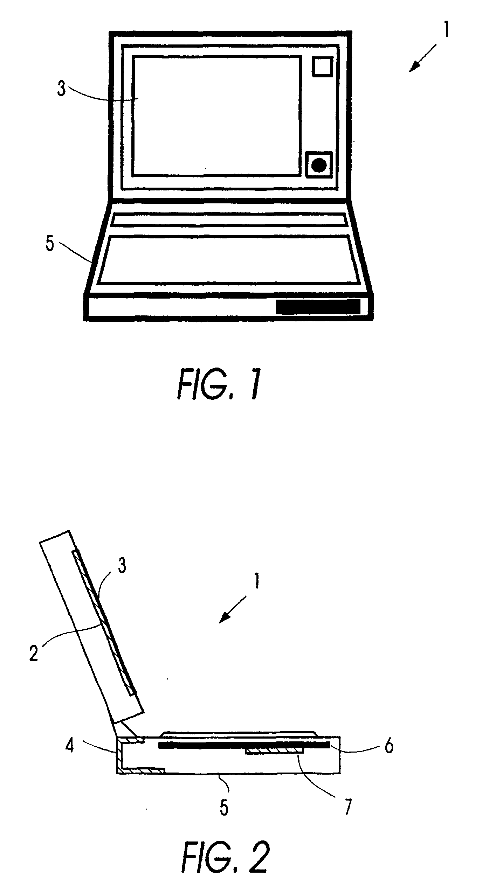

FIG 1 and FIG 2 show a portable computer 1, such as a laptop or notebook computer provided with the solid-state, gel of hybrid polymer electrolyte batteries according to the invention. A first battery 2 is arranged on a surface behind a display 3 of the computer 1. A second battery 4 is arranged on the inside of a casing 5 of the computer 1. A PCB 6 inside the casing 5 is provided with a third battery 7. In this embodiment of an electronic apparatus in the form of a portable computer 1, both the first battery 2 and the third battery 7 have a plane rectangular area. However, the second battery 4 has a shape sufficiently adapted to the interior shape of the casing 5.

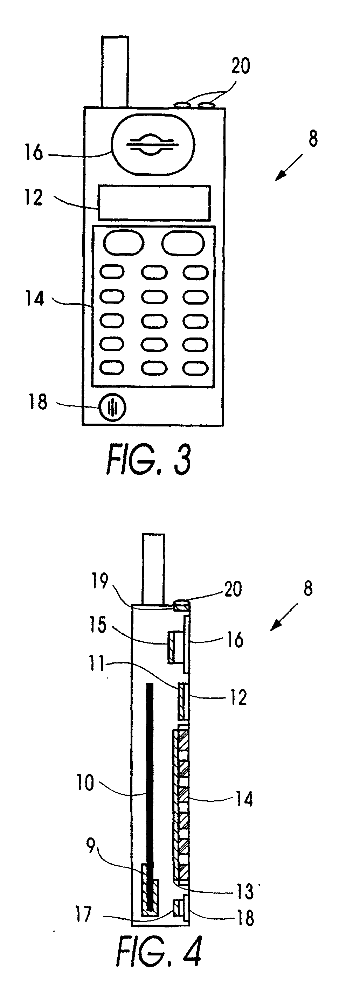

As mentioned above different kinds of electronic devices and apparatuses can be provided with battery arrangements according to the invention. FIGs 3 and 4 show a mobile telephone apparatus 8 provided with a set of batteries according to the invention. A low capacity battery 9 with a voltage of for example 2-3 V is used. The battery 9 is arranged on a PCB 10 in this embodiment. Further a radio part, not shown on the drawings, is provided with a high capacity battery with a voltage of for example 5-6 V. Even this battery may be attached to the PCB 10. A second low capacity battery 11 of for example 6-12 V is attached to a display 12 of the telephone apparatus 8. Additionally a keypad battery 13 is attached to the keypad 14, a loudspeaker battery 15 is attached for the supply of a loudspeaker 16, a microphone battery 17 is attached to a microphone 18, and finally an indicator battery 19 is connected to a light indicator 20.

As electrochemical system Li or Li-ion technology is used for solid-state, gel of hybrid polymer electrolyte batteries according to the present invention. Such cells can be constructed in many different ways with several choices of active materials in the anode and cathode. The use of the polymer electrolyte concept makes the cell self-supporting and eliminates or traps free liquid electrolytes, if it is used in the cell. Consequently, this enables production of cells in almost any shape, wherein the cells are formed from thin cell components. A preferred form of the present invention is thin cells, but not necessarily flat cells.

To some extent specific electrical features can be obtained through this technology by choosing the active electrode material in order to achieve a specific voltage profile and/or connecting cells in series. Another controllable basic performance feature is the capacity, goverened by active material content in the cell.

It should be apparent that the present invention provides an improved battery arrangement for the power supply of the different power consuming components in an electronic apparatus, wherein several batteries are integrated in the apparatus for the supply of particular functions or components. Each battery has suitable electrical features such as voltage and capacity for the current supplied function. According to the described embodiments the apparatuses are provided with battery arrangement having shapes governed by the shape of the present apparatus, wherein cavities and surfaces within the apparatus are used for the location of the batteries.

The invention has been described considering specific embodiments thereof, but this is just intended to be an exemplification of the invention concept and is not intended to limit the invention to the specific embodiments described. In other embodiments of the invention such battery arrangements can be adapted for the components of, for example, a PDA (Personal Digital Assistant), an organizer, a handheld tape-recorder, or CD-player etc.

## Claims

1. A portable electronic apparatus, such as a portable computer or mobile phone, comprising a plurality of battery supplied components (3,6;10,12,14, 16,18,20) of which at least two require different supply voltages or currents, **characterized by** several individual solid-state, gel or hybrid polymer electrolyte batteries (2,4,7;9,13,15,17,19), integrated with the apparatus (1;8), each battery being adapted for the power supply of a particular component, and having a shape suitable to fit into cavities and to engage with a surface of the respective component.

2. A portable electronic apparatus according to claim 1, **characterized in that** a portable computer (1) has a first battery cell (2) attached to a display (3), a second battery cell (4) attached to an inner surface of a casing (5) of the computer (1), and a third battery cell (7) attached to a PCB (6).

3. A portable electronic apparatus according to claim 1, **characterized in that** a mobile telephone apparatus (8) comprising a logic part, a radio part, and a display (16) has a low-capacity battery cell (9) attached to the logic part (10), a high-capacity battery cell attached to the radio part, and a low-capacity battery cell (15) attached to the display (16).

4. A portable electronic apparatus according to claim 3, **characterized by** a keypad battery (13) attached to a keypad (14), a loudspeaker battery (15) attached to a loudspeaker (16), a microphone battery (17) attached to a microphone (18), and an indicator battery (19) connected to a light indicator (20).

## Patentansprüche

1. Tragbare elektronische Vorrichtung, wie ein tragbarer Computer oder ein Mobiltelefon, umfassend mehrere Batterieversorgte Komponenten (3, 6; 10, 12, 14, 16, 18, 20), von denen mindestens zwei unterschiedliche Versorgungsspannungen oder -ströme benötigen, **gekennzeichnet durch** mehrere einzelne Festkörper-, Geloder Hybridpolymer-Elektrolyt Batterien (2, 4, 7; 9, 13, 15, 17, 19), die in die Vorrichtung (1; 8) integriert sind, wobei jede Batterie zur Energieversorgung einer speziellen Komponente geeignet ist und eine Form aufweist, die geeignet ist, in Hohlräume zu passen und mit einer Oberfläche der entsprechenden Komponente in Eingriff zu kommen.

2. Tragbare elektronische Vorrichtung nach Anspruch 1, **dadurch gekennzeichnet, dass** ein tragbarer Computer (1) eine erste Batteriezelle (2), die an einem Display (3) angeschlossen ist, eine zweite Batteriezelle (4), die an einer inneren Oberfläche eines Gehäuses (5) des Computers (1) angeschlossen ist und eine dritte Batteriezelle (7), die an einer Leiterplatte (6) angeschlossen ist, aufweist.

3. Tragbare elektronische Vorrichtung nach Anspruch 1, **dadurch gekennzeichnet, dass** eine Mobiltelefonvorrichtung (8), umfassend einen Elektronikteil, ein Funkteil, und ein Display (16), eine Niedrigleistungsbatteriezelle (9), angeschlossen an dem Elektronikteil (10), eine Hochleistungsbatteriezelle, angeschlossen an dem Funkteil, und eine Niedrigleistungsbatteriezelle (15), angeschlossen an dem Display (16), aufweist.

4. Tragbare elektronische Vorrichtung nach Anspruch 3, **gekennzeichnet durch** eine Tastenfeldbatterie (13), angeschlossen an einem Tastenfeld (14), eine Lautsprecherbatterie (15), angeschlossen an einem Lautsprecher (16), eine Mikrofonbatterie (17), angeschlossen an einem Mikrofon (18), und eine Indikatorbatterie (19), verbunden mit einem Lichtindikator (20).

## Revendications

1. Appareil électronique portable, tel qu'un ordinateur portable ou un téléphone mobile, comportant plusieurs composants (3, 6 ; 10, 12, 14, 16, 18, 20) alimentés par piles dont au moins deux demandent des tensions ou des courants d'alimentation différents, **caractérisé par** plusieurs piles individuelles à polymère hybride ou gel, à l'état solide (2, 4, 7 ; 9, 13, 15, 17, 19), intégrées à l'appareil (1 ; 8), chaque pile étant adaptée pour l'alimentation en énergie d'un composant particulier, et ayant une forme appropriée pour s'ajuster dans des cavités et pour entrer en contact avec une surface du composant respectif.

2. Appareil électronique portable selon la revendication 1, **caractérisé en ce qu'**un ordinateur portable (1) comporte un premier élément de pile (2) relié à un afficheur (3), un deuxième élément de pile (4) relié à une surface intérieure d'un boîtier (5) de l'ordinateur (1), et un troisième élément de pile (7) relié à une plaquette à circuit imprimé (6).

3. Appareil électronique portable selon la revendication 1, **caractérisé en ce qu'**un appareil téléphonique mobile (8) comportant une partie logique, une partie radio et un afficheur (16) a un premier élément de pile (9) à faible capacité relié à la partie logique (10), un élément de pile à haute capacité relié à la partie radio et un élément de pile (15) à faible capacité relié à l'afficheur (16).

4. Appareil électronique portable selon la revendication 3, **caractérisé par** une pile (13) de clavier reliée à un clavier (14), une pile (15) de haut-parleur reliée à un haut-parleur (16), une pile (17) de microphone reliée à un microphone (18) et une pile (19) de témoin reliée à un témoin lumineux (20).
